# EUROPEAN PATENT SPECIFICATION

(11) **EP 2 188 686 B1**
(45) Date of publication and mention of the grant of the patent: **06.05.2015**
(21) Application number: 08787513.4
(22) Date of filing: 27.08.2008
(51) Int. Cl.: G05B 19/409, G05B 19/4063, G05B 19/401, G05B 19/418, G06F 3/042, G08B 13/183

(54) **PROGRAMMABLE SYSTEM FOR CHECKING MECHANICAL COMPONENT PARTS**
PROGRAMMIERBARES SYSTEM ZUR ÜBERPRÜFUNG VON MECHANISCHEN KOMPONENTENTEILEN
SYSTÈME PROGRAMMABLE POUR VÉRIFIER DES PARTIES DE COMPOSANTS MÉCANIQUES

(30) Priority: 30.08.2007 IT BO20070596
(43) Date of publication of application: 26.05.2010
(73) Proprietor: MARPOSS SOCIETA' PER AZIONI, 40010 Bentivoglio (BO) (IT)
(72) Inventor: FERRARI, Andrea, I-44100 Ferrara (IT); PERRONI, Giancarlo, I-47015 Modigliana (FC) (IT)
(86) International application number: PCT/EP2008/061217
(87) International publication number: WO 2009/027430

(56) References cited:
- EP-A- 0 872 787
- EP-A- 1 431 866
- WO-A-02/054161
- WO-A-2005/013021
- DE-A1- 10 236 937
- DE-A1- 19 951 233
- US-A1- 2003 025 082

## Description

### Technical Field

The present invention relates to a system for checking the position and/or dimensions of mechanical pieces, including a checking probe with detecting devices, power supply devices, processing circuits, and at least one remote transceiver unit for the wireless transmission and reception of signals, a base unit for the wireless transmission and reception of signals to and from the remote transceiver unit, the base unit and the at last one remote transceiver unit defining a wireless two-way link, the at least one remote transceiver unit being adapted to transmit through said wireless two-way link detecting signals generated within the checking probe by the detecting devices, display devices, and an interface unit connected to the base unit and comprising control devices adapted to cause the generation of a control signal.

### Background art

There are known systems and methods, that are utilized for example in numerical controlled machine tools, employing contact detecting probes mounted on the machine for determining the position and/or the dimensions of the machined pieces. In the course of the checking cycle, one of such probes moves with respect to the piece, touches the surface to be checked and wirelessly transmits the signal indicative of the contact to a base unit, which is typically located spaced apart from the probe. The base unit is, in turn, connected to a numerical control unit which processes the signals sent by the probe.

The contact detecting probe can include electric batteries for the power supply of the contact detecting circuits and of the circuits for the wireless transmission of the signal by means of an electromagnetic wave of the optical or radio-frequency type. As the probe is utilized just for short intervals during the machining cycle of the associated machine tool, the contact detecting circuits and transmission circuits of the former are normally kept in a low power consumption state, and are fully powered-up only when there is the need to perform a checking cycle, i.e. a contact detection and transmission; this has the purpose of extending battery life as long as possible. The switching from the low power consumption state to the normal operational condition can take place by means of suitable signals, wirelessly transmitted from the base unit. When the checking cycle ends, the probe circuits return to the low power consumption state either further to an explicit message wirelessly sent from the base unit, or, as an alternative, after the elapse of a predetermined time period. This time period can be calculated since the beginning of the checking cycle or, as an alternative, since the last contact signal of the probe.

Should there be more than one probe operating in the same working area, as frequently occurs, there can be necessary to foresee the possibility of selecting one probe among a plurality of probes.

In general, each probe is characterized by the value assumed by some parameters, as, for example, those relating to the transmission frequency (in the case of transmission by means of radio-frequency signals), to the probe identification, to the operation/switching off time, to the calculation mode of a timing generator or switching off timer. As an alternative, some parameters that are not essential for the transmission can be stored in the base unit. For instance, the operation/switching off time can be stored in the base unit so that, upon elapse of the predetermined time period, a suitable control, wirelessly sent, brings the probe to a low power consumption state. Moreover, it could be necessary that the base unit stores some parameters relating to its operation. For example, if the outputs towards the numerical control are implemented by means of a solid state relay (SSR) it is generally useful to programme whether the rest condition corresponds to a closed output (NC: normally-closed) or an open output (NO: normally-open). Another parameter to be stored can be for example the transmission frequency (in the case of transmission by means of radio-frequency signals). Other parameters can be stored and employed as well.

In the known systems, the values of the different parameters are defined and stored in the probe and in the base unit by means of memory devices, that can be programmed with different methods and are typically activated upon assembly in the associated machine. It is possible, for example, to employ mechanical microswitches housed in the probe and in the base unit, or to use push buttons located in the probe for programming the probe and push buttons and symbolic viewers or displays located in the base unit for programming the base unit. Moreover, the probe parameters can be wirelessly programmed by employing an optical or radio-frequency electromagnetic signal sent to the probe by means of suitable transceiver systems. In this case the very push buttons and displays located in the base unit can be utilized for programming the probe, as disclosed for example in the international patent application published with No. WO-A-2005/013021.

The solutions that are currently used for programming probes have various limits. The employ of mechanical microswitches placed in the probes not only makes the latter more complex in terms of manufacturing and thus bulky, but may also affect the battery consumption. Moreover, in the event the parameters should be changed after the installation, the probe must be removed. On the other hand, the employ of a programming push button placed in the probe has some limits. In fact, by means of such push button and using as a feedback light emitting diodes (LEDs) located in the probe, two different operations must be performed, that is "streaming" the values of pre-defined sequences and selecting the desired options: in the case of complex parameters, such as, for example, the setting of the frequency transmission, the operations could be very onerous for both the user's undertaking and the battery consumption. In this case, the insertion of a display in the probe for facilitating programming operations causes increased costs in terms of consumption and space. These aspects are improved in solutions including a remote programming by means of the base unit, such as, for example, the solution described in the hereinbefore mentioned international patent application published with No. WO-A-2005/013021. The known solutions don't have any particular problems when the base unit, or part of the base unit, is arranged at a position which doesn't need a wet seal and could be easily reached by the operator, such as, for example, within the machine cabinet or near the numerical control panel.

However, it is often needed that the transceiver unit of the base unit is located within the working area of the machine so that the wireless connection is reliable. Hence, the base unit must be wet sealed, can be subjected to dirt and can be hardly reached by the operator.

U.S. patent application published with No. US 2004/0131361 refers to an HMI device for monitoring and control of a technical process. The HMI device includes a processing module, at least for computer generating dynamic process images with interactive regions, and an optical transmitter and receiver module connected to the processing module, with a projector and a detector adapted to generate light images and detect pointing actions of an operator in the interactive regions of the generated images.

The HMI device can be mounted on a control panel or can be embodied as a mobile unit that communicates with a central processing unit of a technical installation through a wireless connection. The U.S. patent application shows a device allowing a user friendly, graphical approach to an operator supervising a technical process. No interfacing between a checking probe and a base unit is shown or suggested. In any case, the U.S. publication suggests that the whole interface (processing module and optical module) can be embodied as a mobile unit. As a consequence, when the reliability of the wireless connection requires to place the interface not so far from the relative CPU, i.e. within a working area, problems of sealing, dirt and accessibility as set forth before in connection with prior art solutions, remain unsolved.

### Disclosure of the invention

Object of the present invention is to provide a system which does not have the same problems of the known systems and wherein the values of the programmable parameters characterizing each probe and base unit can be modified in a simple and reliable way.

This and other objects and advantages are achieved by a checking system according to claim 1.

### Brief Description of the Drawings

The invention is now described with reference to the enclosed sheets of drawings, given by way of non limiting examples, wherein:
figure 1 shows, in a simplified way, a checking system according to the present invention;
figure 2 is a block diagram of the circuits associated to the base unit of figure 1;
figure 3 shows the structure of a possible remote controller for programming the system according to the present invention; and
figures 4 and 5 are flow-charts showing a possible programming cycle.

### Best Mode for Carrying Out the Invention

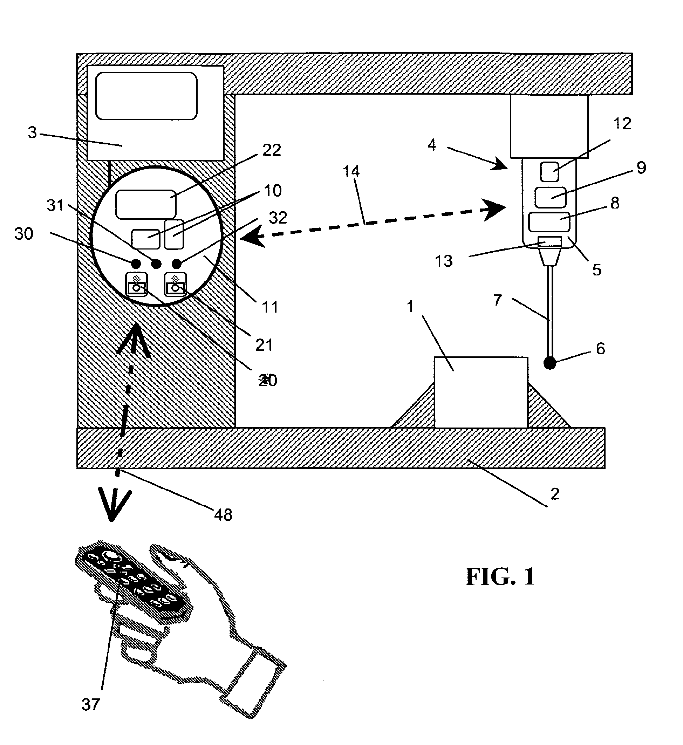

Figure 1 illustrates, in a simplified form, a system for detecting linear dimensions of a piece **1** in a machine tool, for example a machining centre, schematically shown in figure 1 and identified with reference number **2.** The system includes a computer numerical control **3,** which superintends the operation of the machine tool **2,** a detecting apparatus including a checking probe **4,** and a base unit **11,** with an integrated interface (as it will be hereinafter described) connected to the numerical control **3** by wire. The checking probe **4,** for example a contact detecting probe, has a support and reference portion **5,** connected to the slides of the machine tool **2,** a feeler **6** and an arm **7** which carries the feeler **6** and is movable with respect to the support and reference portion **5.** Moreover, the probe **4** includes detecting devices, for example a microswitch **13,** power supply devices **12** including a battery, one (or more) remote transceiver unit **8** for remotely and wirelessly transmitting and receiving signals, to and from the base unit 11, and processing circuits, such as, for example, logic or memory units, that are schematically shown in figure 1 and indicated with reference number **9.** The type of the processing circuits **9,** that can be implemented in different ways and can be employed, among other things, for programming the parameters of the probe **4,** is not herein outlined in detail and reference can be made to the already mentioned patent application published with No. WO-A-2005/013021 for a more detailed description. The base unit **11,** preferably stationary, includes, in turn, one or more transceiver devices **10** for communicating with the probe **4.** The remote transceiver unit **8** and the transceiver device/s **10** of the base unit **11** define a single wireless two-way communication link **14,** for example for a radio-frequency transmission on a single channel, or for the transmission of information by means of optical or acoustic signals or wireless means according to a different technology. The transceiver devices **10** of the base unit **11** serves to send, further to a request sent by the computer numerical control **3** and, for example, through the radio-frequency channel, coded signals to the remote transceiver unit **8** of the probe **4** for requesting to bring the probe **4** to normal operational conditions or to a low power consumption state. The transceiver devices **10** also serve to receive from the remote unit **8** of the probe **4** coded signals, for example of the radio-frequency type too, that can indicate the position in the space of the feeler **6** with respect to the support **5,** the charge level of the battery **12** of the probe **4,** the identity of the probe **4** in the case of a selective actuation, or other information.

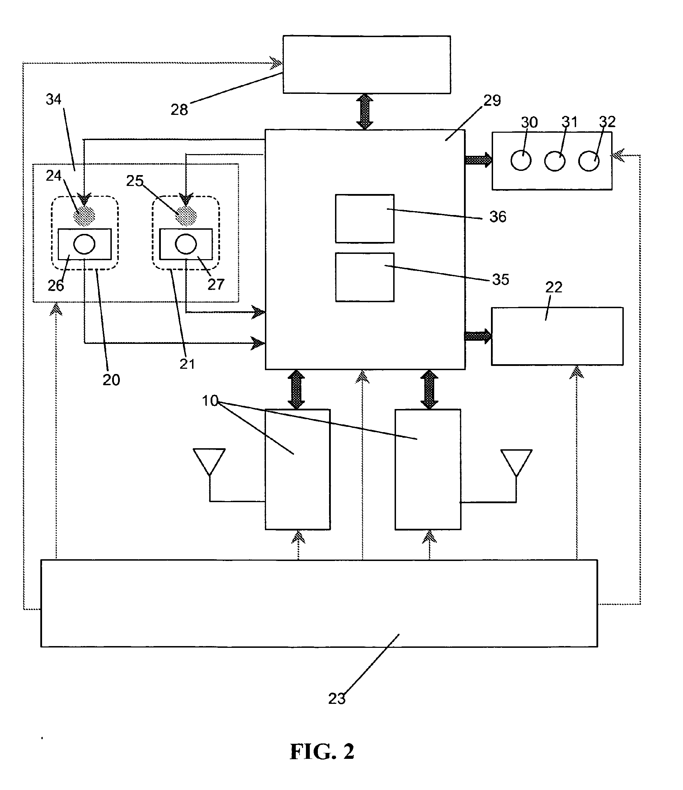

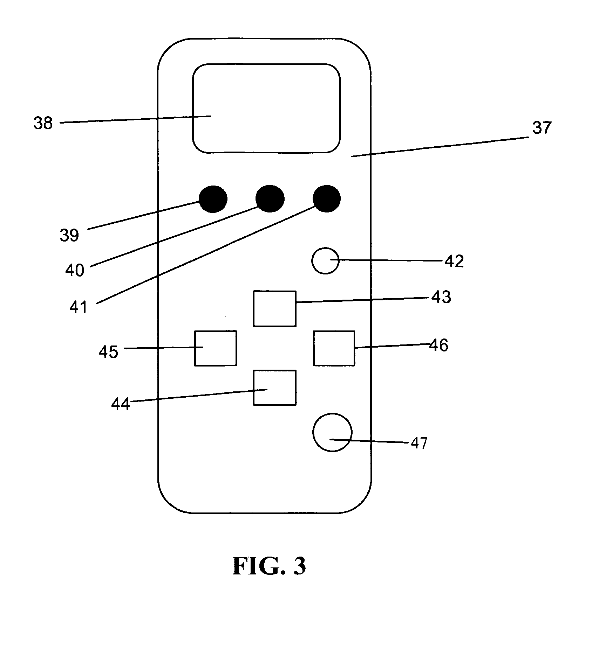

An interface unit **34** (visible in figure 2 in more detail) having a high sealing degree and connected to the base unit **11,** preferably but not necessarily integrated with the latter, includes one or more control devices. Two of such control devices, i.e. two transceivers, preferably infrared transceivers **20** and **21,** are shown in figure 1. Such control devices can act as contactless switches, in particular optical switches, for transmitting radiations and detecting reflections caused by an approaching object, for example the operator's finger. The same control devices **20** and **21** can, as an alternative, detect commands given by means of an infrared remote controller **37,** which can be dedicated or of the universal type. Signals caused by detection of either the reflections or the above-mentioned commands, are sent by the control devices **20** and **21** to a logic unit **29** as it will be hereinafter illustrated. The interface unit **34** can further include indication devices such as for example a symbolic viewer or display **22** and/or light emitting diodes **30,31,32** that could also provide different indications in different operation conditions (state and power supply of the probe **4** or an error under normal operational conditions, "select" and "enter" in programming phase...). The dedicated remote controller **37** (figure 3) can comprise these indication devices, as it will be hereinafter disclosed.

The general structure of the circuit component part of the base unit **11** of the system is shown in figure 2. The previously mentioned logic control unit **29** (for example a microcontroller) superintends and manages all the activities of the base unit **11.** The logic control unit **29** is a programmable unit including registers **36** and a nonvolatile memory **35** that enable to permanently store programming data and parameters. A further external memory **28,** for example an EEPROM, can be included. The logic unit **29** communicates with the interface unit **34** for receiving signals and generating controls relating to the system programming (of the base unit **11** and/or the probe **4)** and can display various information by means of suitable display devices such as for example the previously mentioned display **22** and/or the light emitting diodes **30,31,32.** Figure 2 also shows two of the already mentioned transceiver devices **10** that, during the reception phase, i.e. when the base unit **11** is set for receiving signals, can both operate for compensating possible problems due to multiple paths. On the contrary, during the transmission phase, i.e. when the base unit **11** is set for transmitting signals, the transceiver devices **10** can operate only one by one, one excluding the other. All the elements of the base unit **11** are fed by a suitable power supply system **23.**

The interface unit **34** includes, as previously stated, infrared transceivers **20** and **21,** i.e. pairs **24-25** and **26-27** of receivers **(26** and **27,** for receiving infrared signals) and emitters **(24** and **25,** for emitting infrared signals). The transceivers **20** and **21** define - as already stated - two contactless switches, in particular optical switches. The respective emitters **24** and **25,** for example infrared diodes, generate and radiate a coded infrared signal: if an obstacle, for example an operator's finger, approaches one or both the optical switches, the infrared signal radiated by the emitters **24** and **25** is reflected and then detected by the receivers **26** and **27,** so realizing a condition of "pressed key". Such a condition causes the logic unit **29** to generate a control signal which can be utilized for programming the base unit **11** and/or the probe **4** and can be signalled by means of the display devices located in the base unit **11** (the display **22** and/or some light emitting diodes, for example the diodes **30** and **32)** with the purpose of informing the operator that a key has been pressed. The display **22** indicates the parameter which is being set (for example: transmission channel) and its value as well. The display devices can be also used, under normal operational conditions and beyond the programming scope, for signalling, for example, that the contact between the feeler **6** and the piece **1** has occurred, or the battery in the probe **4** is almost exhausted, or the wireless linking between the base unit **11** and the probe **4** is down, or other information.

According to a different operating mode of the system, one of the infrared receiver (for example the receiver **26)** is used for receiving a command consisting in a coded signal which is provided by the remote controller **37** through a second wireless link **48.** In this case the display devices can be those, already mentioned, located in the base unit **11** (display **22** / LEDs **30,31,32)** or a display **38** and some LEDs **39,40,41** placed in the remote controller **37.**

The operation of the checking system is generally per se known. Briefly, further to the contact between the feeler **6** of the probe **4** and the surface of the piece **1** to be checked, the microswitch **13** detects displacements of the arm **7** and generates a detecting signal which is processed and transmitted from the remote unit **8** to the transceiver devices **10** of the base unit **11** through the wireless link **14.**

The programming phase of the probe can be performed as disclosed in the previously mentioned international patent application published with No. WO-A-2005/013021. With reference to the system illustrated in such patent application, the control devices including the keys of the interface unit are replaced by the transceivers **20** and **21** of the base unit **11,** or by the respective receivers **26** and **27,** or by at least one of such receivers, the activation mode thereof will be hereinafter described.

Insofar as the operation of the interface unit **34** is concerned, the two emitters **24** and **25** emitting infrared beams can be driven by the logic unit **29** by means of suitable coded signals, the power thereof can be possibly set by means of suitable generation techniques.

When a reflecting body, for example an operator's finger, approaches one or both the optical switches **20** and **21,** the receivers **26** and **27** provide in response a signal which can be read by the logic unit **29,** and the latter can thus detect that one or both the switches **20** and **21** have been "pressed".

For the purpose to avoid false signalling due to casual passing of solid bodies or dirt deposit in front of the optical switches **20** and **21,** it is possible to carry out a self-calibrating cycle, thanks to the possibility of setting the signal power of the emitters **24** and **25** as it will be hereinafter briefly described. It is possible to use other techniques for avoiding false signalling, for example on the basis of a minimum time interval in the course of which the receivers **26** and **27** detect a stable coded signal.

As already mentioned, since the accumulated dirt in front of the switch panel can increase and thus cause a gradual lowering of the standards of performance of the switches 20 and **21,** it is possible to periodically carry out self-calibrating, or zero-setting, cycles. For this purpose, the logic unit **29** can be programmed so as to actuate at regular intervals - for example when the interface unit **34** is not used for programming and the probe **4** is in a low consumption state, or sporadically during the programming cycles - a calibrating procedure enabling to define and redefine an amount of signal power which is sufficient for driving the emitters **24** and **25** so as to cause that the sensitivity of the switches **20** and **21** to the "pressure" remains unchanged over time as much as possible. This gauging can be carried out, for example, by detecting each time the power maximum value of the emitted infrared beam beyond which the receivers **26** and **27** detect the reflection of such signal caused by a simple transparent or semitransparent covering (such as the protective glass) placed on the base unit **11.**

As already mentioned, according to a different operation mode of the system, the logic unit **29** is programmed so as to be able to recognise - by means of at least one infrared receiver (for example the receiver **26)** not only the signal provided by the emitters **24** and/or **25** (and properly reflected) but also a coded signal emitted by the remote controller **37** and transmitted through the second remote link **48.** The remote controller **37** can be a commercial device - as the remote controllers associated to common household appliances or so-called universal type remote controllers - or a dedicated or "customized" device, as that one shown in figure 3. With reference to such figure, assuming that the programming tree of the system includes a main menu enabling to have access to various submenus for parameters definition, it is possible to use the following matching between the keys of the remote controller 37 and associated functions in the system:
key **42:** enter/esc from the programming phase (ON/OFF)
key **43:** forward selection (select +)
key **44:** backward selection (select -)
key **45:** menu esc (enter -)
key **46:** menu enter (enter +)
key **47:** on-line help.

In particular, in the illustrated example and according to a programming method substantially corresponding to what has been described in the previously mentioned patent application published with No. WO-A-2005/013021, the forward selection key **43** and backward selection key **44** are used to cause commands relating to displacements among the different submenus of the main menu and to the selection of the wanted value among a sequence of possible values for a certain parameter (which could be either a numerical value among many values or an option between two or more options such as the choice of a normally-open output or a normally-closed output or yes/no type response to a request). On their turn, the menu enter key **46** and menu esc key **45** serves to cause controls relating to forward and backward displacements within a submenu of the main menu (implicitly confirming the parameter value displayed in the display) or to enter a submenu of the main menu.

At the end of a programming cycle (which can be carried out either using the remote controller **37** or acting on the contactless switches **20** and **21)** it is possible to request an explicit updating confirmation of the parameter values, in a per se known way.

The ON/OFF key **42** serves to start or end the programming phase, whereas the key **47** is optional and serves to display on a suitable device, such as for example the display **22** or the display **38** integrated in the remote controller **37,** help information about the current programming phase.

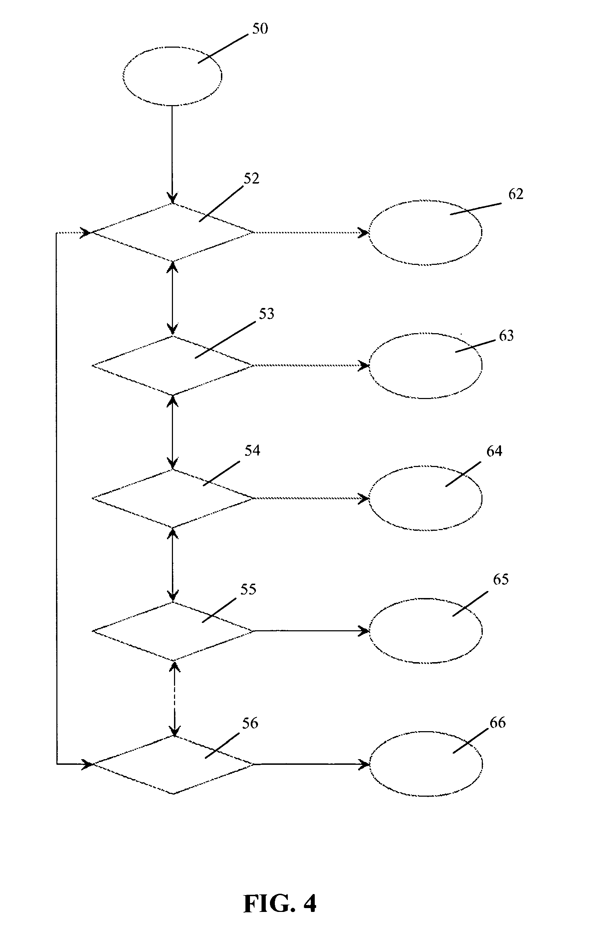

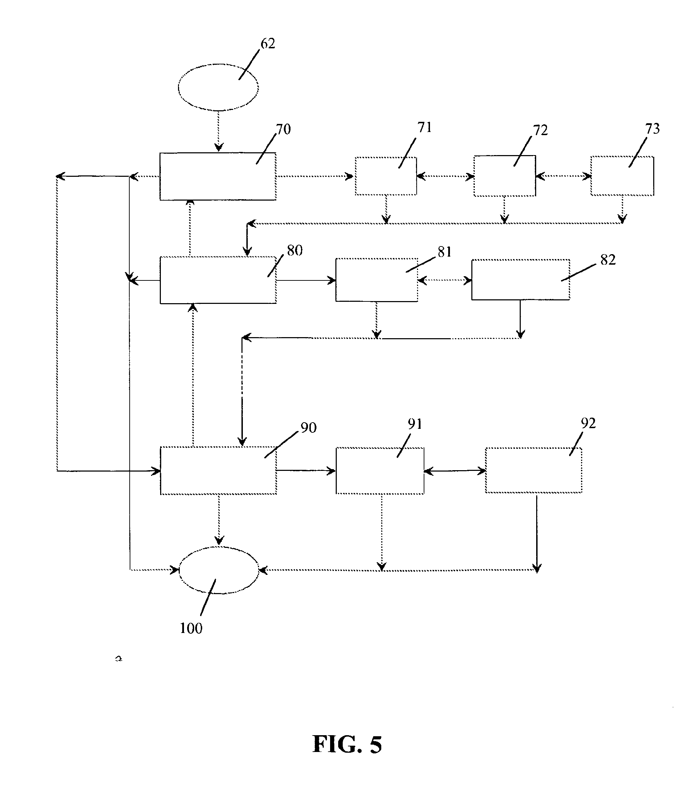

Possible steps carried out by means of the remote controller **37** are shown, just as an example, in the flow-charts of figures 4 and 5 referring to a main menu and a submenu, respectively.

In figure 4, block **50** indicates starting of the operation by means of the ON/OFF key **42.** Blocks **52-56** indicate different submenus selections that can be sequentially displayed by acting on the forward and backward selection keys **43** and **44,** while blocks **62-66** indicate the corresponding submenus. More specifically the submenu selections and corresponding submenus according to the example of figure 4 are:
**52/62 -** programming the base unit **11;**
**53/63 -** programming the probe **4;**
**54/64 -** activating the probe **4;**
**55/65 -** linking the probe **4** to the base unit **11;** and
**56/66 -** restarting the system.

Additional submenus and relevant selections can be provided for, as indicated by the partly broken line between blocks **55** and **56.**

In order to enter the submenu according to the currently displayed selection, menu enter key **46** is acted on.

For example, in order to program the base station **11,** after having started the operation (by means of key **42),** keys **43** and **44** are acted on until selection **52** is displayed. Then, key **46** is pushed to enter the submenu **62** to which the flow chart of figure 5 refers.

In figure 5, blocks **70** and **80** indicate different parameters while blocks **90** and **100** refer to the updating confirmation that is mentioned above and to the end of the programming cycle, respectively. As an example, only two parameters are shown in figure 5, but they are generally more, as suggested by the partly broken lines between blocks **80, 81** and **82** and block **90.** Parameters **70** and **80** (and additional ones) can be sequentially displayed by acting on the menu enter and esc keys **46** and **45.** Blocks **71-73** and **81-82** indicate possible values for each of the (two) parameters and blocks **91** and **92** represent possible choices in connection with the updating confirmation.

More specifically, block **70** may, for example, indicate a maximum time interval in which a signal from the probe **4** can be expected, while block **80** may, for example, indicate the possibility of enabling or disabling the so-called (and per se well-known) "retrigger" of such maximum time interval, i.e. the re-start of counting such time interval at the receipt of a signal indicative of a change in the state of the probe **4.** Blocks **71-73** represent a sequence of possible values for the interval of block **70.** It is to be noted that only three blocks are shown, while the number of selectable values can be higher, as schematically indicated by the partly broken line between blocks **72** and **73.** Blocks **81-82** represent the only two possible choices for the retrigger option: yes/enable **(81)** and no/disable **(82).**

In order to define the desired value for a parameter, for example the time interval, the relevant parameter (block **70)** is selected by acting on the enter and esc menu keys **46** and **45,** then the relevant value is chosen within the sequence of blocks **71-73** by acting on the forward and backward selection keys **43** and **44,** and selection of such value takes place by means of key **46.**

The next parameter(s), for example the retrigger option represented by block **80** and/or others that are not represented in the schematic flow chart of figure 5 are then programmed in the same way. It is underlined that the minimum number of values that may be selectable for each parameter is two, as in the example of blocks **81** and **82** (enable or disable), while it is not theoretically possible to establish a maximum number, since some parameters might assume many possible values.

Once values of all parameters are defined, a final confirmation may be asked for (block **90)** and the possible choices are YES (block **91)** or NO (block **90),** such choices being selectable following the same procedure used for selecting the value of each parameter. If the YES choice is selected, the updated, selected values are stored, for example, in the non volatile memory **35** of base unit **11,** while, if the "NO" is chosen, the programmation is aborted and, for example, all the updated, selected parameters values are deleted and original values are restored. After final confirmation (or abort) the programming cycle ends (block **100)**.

In case that the remote controller **37** include some indication devices, such as the already mentioned display **38** and/or light emitting diodes **39,40,41,** the communication between the base unit **11** and the remote controller **37** is a two-way communication that can make use of the emitters **24** and **25** of figure 2.

A checking system according to the present invention enables to perform cycles for programming the parameters of the probe **4** by means of signals that are sent from the base unit **11** through the wireless two-way link **14** in per se known ways (for example according to what has been disclosed in the already mentioned international patent application published with No. WO-A-2005/013021, but also according to different methods and procedures). The system according to the present invention ensures a correct operation that is particularly reliable over time thanks to the presence of the contactless switches **20** and **21** which are completely located within the base unit **11** and don't have moving mechanical parts. In this way, it is possible to simply implement a wet sealed base unit **11** and arrange it in a suitable position within the working area. The possibilities of carrying out self-calibrations that have been previously disclosed further ensure the maintenance of the system performance over time.

In addition to the already mentioned programming operations of the probe **4,** the system has the same advantages insofar as the programming of the parameters of the base unit **11** is concerned.

The use of at least one of the receivers **26, 27** of the transceivers **20, 21** for receiving a signal generated by a remote controller **37,** dedicated or universal, enables the further important advantage of performing programming operations - of the probe **4** and/or the base unit **11 -** even in case that the base unit **11** is arranged in a position which the operator can hardly reach.

Moreover, the employ of an universal remote controller **37** enables to obtain remarkable advantages utilising a commercial object which is very common and involves low costs.

Checking systems according to the present invention can include embodiments differing from what has been herein so far described. For instance, it is possible to use a remote controller communicating through radio-frequency electromagnetic signals instead of infrared signals.

## Claims

1. System for checking the position and/or the dimensions of mechanical pieces **(1)** including
• a checking probe **(4)** with
- detecting devices **(13),**
- power supply devices **(12),**
- processing devices **(9),** and
- at least one remote transceiver unit **(8)** for the wireless transmission and reception of signals,
• a base unit **(11),** for the wireless transmission and reception of signals to and from said at least one remote transceiver unit **(8),** the base unit **(11)** and said at last one remote transceiver unit **(8)** defining a wireless two-way link **(14),** said at least one remote transceiver unit **(8)** being adapted to transmit through said wireless two-way link **(14)** detecting signals generated within the checking probe **(4)** by the detecting devices **(13),**
• display devices **(22,30,31,32,38,39,40,41),** and
• an interface unit **(34)** connected to the base unit **(11)** and including control devices adapted to cause the generation of a control signal,
**characterized in that** the control devices of the interface unit **(34)** include at least one transceiver with a receiver **(26,27),** the system further including a remote controller **(37)** adapted to transmit coded signals and to define a second wireless link **(48)** including said receiver **(26,27),** the receiver **(26,27)** being adapted to receive said coded signals through the second wireless link **(48)** and to cause said generation of a control signal once the reception has occurred, said at least one transceiver **(20,21)** further including an emitter **(24,25)** adapted to emit said coded signals, said receiver **(26,27)** being also adapted for receiving said coded signals emitted by the emitter **(24,25)** and reflected by an obstacle, and for consequently causing said generation of a control signal, so realizing a contactless switch.

2. The system according to claim 1, wherein the interface unit (34) is integrated in the base unit **(11).**

3. The system according to any one of the preceding claims, wherein said remote controller **(37)** is a commercial, not customized device of the universal type.

4. The system according to any one of the preceding claims, wherein said remote controller **(37)** includes at least some of said display devices **(38,39,40,41).**

5. The system according to any one of the preceding claims, for checking mechanical pieces in a grinding machine **(2),** wherein the checking probe is a contact detecting probe **(4)** and the detecting devices include a microswitch **(13).**

6. The system according to any one of the preceding claims, wherein said wireless two-way link **(14)** is of the radio-frequency type.

7. The system according to any one of the preceding claims, wherein said receiver **(26,27)** is an infrared receiver.

8. The system according to any one of claims 1 to 6, wherein said receiver is a radio-frequency receiver.

9. The system according to claim 1, wherein said emitter **(24,25)** and said remote controller **(37)** are adapted for emitting optical signals in the infrared range, said emitter **(24,25)** and said receiver **(26,27)** forming an optical switch **(20,21).**

## Patentansprüche

1. System zum Überprüfen der Position und/oder der Abmessungen von mechanischen Teilen (1) einschließlich
• einer Prüfsonde (4) mit
- Erkennungsvorrichtungen (13),
- Stromversorgungsvorrichtungen (12),
- Verarbeitungsvorrichtungen (9), und
- mindestens einem Remote-Sende-Empfangsgerät (8) für die drahtlose Übertragung und den Empfang von Signalen,
• einer Basiseinheit (11), für die drahtlose Übertragung und den Empfang von Signalen zu und von dem mindestens einen Remote-Sende-Empfangsgerät (8), wobei die Basiseinheit (11) und das mindestens eine Remote-Sende-Empfangsgerät (8) eine drahtlose bidirektionale Übertragungsstrecke (14) definieren, wobei das mindestens eine Remote-Sende-Empfangsgerät (8) dazu geeignet ist, Erkennungssignale, die innerhalb der Prüfsonde (4) durch die Erkennungsvorrichtungen (13) erzeugt werden, über die drahtlose bidirektionale Übertragungsstrecke (14) zu übertragen.
• Anzeigevorrichtungen (22, 30, 31, 32, 38, 39, 40, 41), und
• einer Schnittstelleneinheit (34), die mit der Basiseinheit (11) verbunden ist und Steuervorrichtungen einschließt, die geeignet sind, die Erzeugung eines Steuersignals zu bewirken,
**dadurch gekennzeichnet, dass** die Steuervorrichtungen der Schnittstelleneinheit (34) zumindest ein Sende-Empfangsgerät mit einem Empfänger (26, 27) einschließen, wobei das System ferner eine Fernsteuerung (37) einschließt, die geeignet ist, codierte Signale zu übertragen und eine zweite drahtlose Übertragungsstrecke (48) einschließlich des Empfängers (26, 27) zu definieren, wobei der Empfänger (26, 27) geeignet ist, die codierten Signale über die zweite drahtlose Übertragungsstrecke (48) zu empfangen und die Erzeugung eines Steuersignals bewirken, sobald der Empfang stattgefunden hat, wobei das zumindest eine Sende-Empfangsgerät (20, 21) ferner einen Sender (24, 25) einschließt, der geeignet ist, die codierten Signale zu senden, wobei der Empfänger (26, 27) auch geeignet ist, die von dem Sender (24, 25) gesendeten und von einem Hindernis reflektierten codierten Signale zu empfangen und somit die Erzeugung eines Steuersignals zu bewirken, und so einen kontaktlosen Schalter zu realisieren.

2. System nach Anspruch 1, wobei die Schnittstelleneinheit (34) in der Basiseinheit (11) integriert ist.

3. System nach einem der vorhergehenden Ansprüche, wobei die Fernsteuerung (37) eine handelsübliche, nicht kundenspezifische Vorrichtung universellen Typs ist.

4. System nach einem der vorhergehenden Ansprüche, wobei die Fernsteuerung (37) zumindest einige der Anzeigevorrichtungen (38, 39, 40, 41) einschließt.

5. System nach einem der vorhergehenden Ansprüche, zum Überprüfen mechanischer Teile in einer Schleifmaschine (2), wobei die Prüfsonde eine Kontakterkennungssonde (4) ist und die Erkennungsvorrichtungen einen Mikroschalter (13) einschließen.

6. System nach einem der vorhergehenden Ansprüche, wobei die drahtlose bidirektionale Übertragungsstrecke (14) hochfrequenten Typs ist.

7. System nach einem der vorhergehenden Ansprüche, wobei der Empfänger (26, 27) ein Infrarotempfänger ist.

8. System nach einem der Ansprüche 1 bis 6, wobei der Empfänger ein Hochfrequenzempfänger ist.

9. System nach Anspruch 1, wobei der Sender (24, 25) und die Fernsteuerung (37) geeignet sind, optische Signale im Infrarotbereich zu senden, und der Sender (24, 25) und Empfänger (26, 27) einen optischen Schalter (20, 21) bilden.

## Revendications

1. Système de vérification de la position et/ou des dimensions de pièces mécaniques (1) incluant :
• Une sonde de contrôle (4) avec :
- des dispositifs de détection (13)
- des dispositifs d'alimentation en énergie (12)
- des dispositifs de traitement (9), et
- au moins un émetteur-récepteur distant (8) pour la transmission et la réception sans fil de signaux,
• une unité de base (11) pour la transmission et la réception sans fil de signaux vers et en provenance dudit au moins un émetteur-récepteur distant (8), l'unité de base (11) et ledit au moins un émetteur-récepteur distant (8) définissant un lien bidirectionnel sans fil (14), ledit au moins un émetteur-récepteur distant (8) étant adapté pour transmettre via le lien bidirectionnel sans fil (14) des signaux de détection générés dans la sonde de contrôle (4) par les des dispositifs de détection (13),
• des dispositifs d'affichage (22,30,31,32,38,39,40,41), et
• une unité d'interface (34) connectée à l'unité de base (11) et incluant des dispositifs de contrôle adaptés pour provoquer la génération d'un signal de contrôle, **caractérisé en ce que** les dispositifs de contrôle de l'unité d'interface (34) incluent au moins un émetteur-récepteur avec un récepteur (26,27), le système incluant en outre un télécommande (37) adapté pour transmettre des signaux codés et pour définir un second lien sans fil (48) incluant ledit récepteur (26,27), le récepteur (26,27) étant adapté à recevoir lesdits signaux codés via le second lien sans fil (48) et à provoquer ladite génération d'un signal de contrôle une fois que la réception a eu lieu, ledit au moins un émetteur-récepteur (20,21) incluant en outre un émetteur (24,25) adapté à émettre lesdits signaux codés, ledit récepteur (26,27) étant également adapté à recevoir lesdits signaux codés émis par l'émetteur (24,25) et réfléchis par un obstacle, et pour provoquer par voie de conséquence ladite génération d'un signal de contrôle, réalisant ainsi un interrupteur sans contact.

2. Système selon la revendication 1, où l'unité d'interface (34) est intégrée dans l'unité de base (11).

3. Système selon l'une quelconque des revendications précédentes, où ledit télécommande (37) est un dispositif commercial non personnalisé de type universel.

4. Système selon l'une quelconque des revendications précédentes, où ledit télécommande (37) inclut au moins certains desdits dispositifs d'affichage (38,39,40,41).

5. Système selon l'une quelconque des revendications précédentes pour contrôler des pièces mécaniques dans une rectifieuse (2), où la sonde de contrôle est une sonde de détection de contact (4) et les dispositifs de détection incluent un micro-interrupteur (13).

6. Système selon l'une quelconque des revendications précédentes, où ledit lien bidirectionnel sans fil (14) est de type radiofréquence.

7. Système selon l'une quelconque des revendications précédentes, où ledit récepteur (26,27) est un récepteur infrarouge.

8. Système selon l'une quelconque des revendications 1 à 6, où ledit récepteur est un récepteur radiofréquence.

9. Système selon la revendication 1, où ledit émetteur (24,25) et ledit télécommande (37) sont adaptés pour émettre des signaux optiques dans la bande infrarouge, ledit émetteur (24,25) et ledit récepteur (26,27) formant un interrupteur optique (20,21).
